Europäisches Patentamt

(19) European Patent Office

Office européen des brevets

(11) Publication number: **0 047 585**
A1

## (12) EUROPEAN PATENT APPLICATION

(21) Application number: **81303670.4**

(51) Int. Cl.³: **F 16 G 5/16**

(22) Date of filing: **12.08.81**

(30) Priority: **08.09.80 US 184711**

(43) Date of publication of application: **17.03.82**
Bulletin **82/11**

(84) Designated Contracting States: **BE CH DE FR GB IT LI NL SE**

(71) Applicant: **The Gates Rubber Company, 999 South Broadway P.O. Box 5887, Denver, Colorado 80217 (US)**

(72) Inventor: **Russ, Paul E., Sr., 6297 West Nova Drive, Littleton Colorado 80123 (US)**

(74) Representative: **Carpmael, John William Maurice et al, CARPMAELS & RANSFORD 43 Bloomsbury Square, London, WC1A 2RA (GB)**

(54) **V-block belt.**

(57) A V-block type belt with anti-back bending means formed by reactive surfaces (60,62) above an equatorial plane (36) of the belt. The surfaces (60,62) contact each other when the belt is substantially straight (Fig. 2) and move apart during belt front bending (Fig. 3). The reactive surfaces may be formed as an integral part of elastomeric blocks (16,18) that form V-sides (46,48) of the belt.

-1-

## V-BLOCK BELT

The invention relates to machine elements and mechanisms but more particularly, the invention relates to V-block belts.

V-block belts are extensively used as variable speed belts because their construction allows a low thickness to width ratio to accommodate desirable speed ratio changes in variable speed belt drives. Such belts are usually constructed with a flat band type load carrying member that establishes an equatorial plane about which bending takes place. V-blocks are longitudinally spaced and attached to the load carrying member such as by clamping or molding. Examples of clamped-type belts appear in U.S.Patents 1446018, 2343367 and 2647410. U.S.Patent 4177687 teaches how to solve many horsepower/torque problems of clamped-type V-block belts by using a molded polymeric material around diagonal side members of a reinforcement that surrounds and supports the load carrying member.

Block belts may be extremely flexible in front and back bending because of the thinness of the flat load carrying member spanning successive blocks. Too much belt flexibility may introduce belt vibration between pulleys or difficulty in extracting wedged blocks from pulleys during belt operation. U.S.Patent 1446018 teaches how to inhibit belt back bending in one direction of belt travel with successive plates that each extend from the top of one V-block and tangentially over the load carrying member portion between successive blocks. The problem with such constructions is that it only inhibits belt back bending in one direction of belt travel. (The plates are inoperative when the blocks are operated in the opposite direction). U.S.Patent 1446018 and 2343367 show vertical portions of blocks above the equatorial plane of the load carrying members; however, the blocks are spaced far apart from one another and are not effective to control belt back bending.

In accordance with the invention, a V-block belt

-2-

is provided which inhibits belt back bending in both directions of belt travel. In a preferable embodiment, elastomeric portions are molded around diagonal side members of reinforcements that are attached to and longitudinally spaced from each other along a flat band type load carrying member. Each elastomeric portion forms a V-side with a frictional driving surface that projects below the equatorial plane of the load carrying member. Optionally, the frictional driving surface also projects above the equatorial plane of the load carrying member as an extension of a V-side.

Each elastomeric portion has two oppositely facing sides interconnecting the V-side and oriented transversely to the load carrying member to define two reactive surfaces. The reactive surfaces are located above and extend generally normal to the equatorial plane of the load carrying member. The reactive surfaces between successive blocks are positioned to contact each other during belt back bending and move apart during belt front bending and aid in dampening free span belt vibration while also providing a means for disengaging blocks from a pulley.

These and other advantages of the invention will be apparent after reviewing the drawings and description thereof wherein:

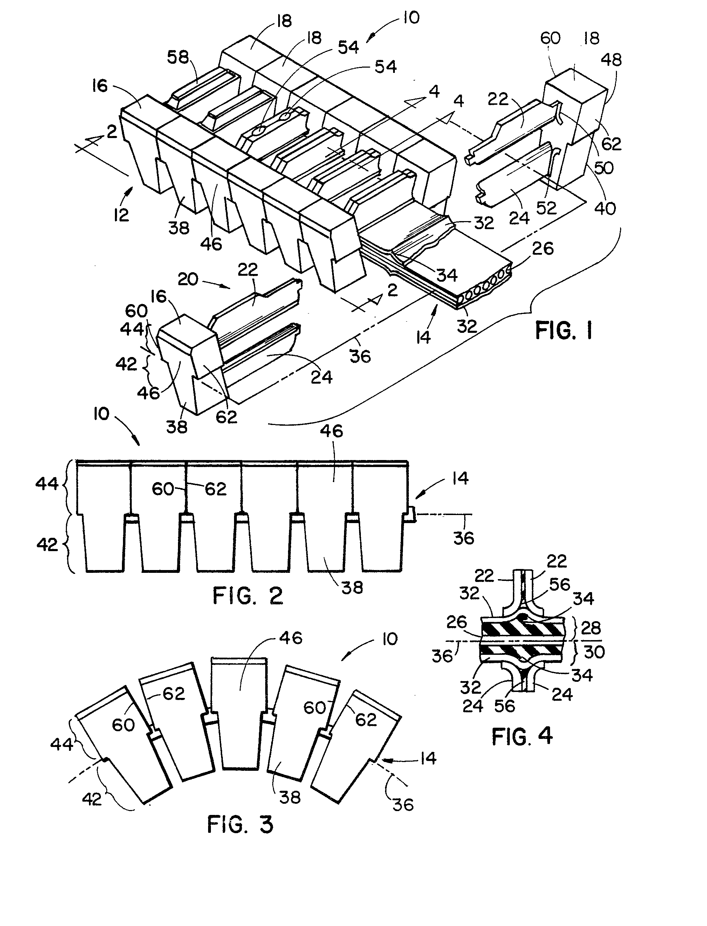

FIGURE 1 is an exploded isometric partial view of a V-block belt of the invention;

FIGURE 2 is a partial side view taken along the line 2-2 of Figure 1 showing reactive surface portions of the blocks in engagement to inhibit belt back bending;

FIGURE 3 is a partial side view similar to that of Figure 2 but showing the reactive surface portions moved apart during belt front bending, and

FIGURE 4 is a partial cross-sectional side view taken along the line 4-4 of Figure 1.

The back bend inhibiting feature of the invention may be used with several types of V-block belts such as those in the clamped category of U.S.Patent 2343367 or in the surrounding reinforcement and molded category of U.S.Patent 4177687.   A belt of the latter category is used to illustrate the invention.   In the Figures, the belt 10 has a plurality of V-blocks 12 attached to a load carrying member 14 which preferably is of the flat band type.   Each block has two elastomeric portions 16, 18, that are integrally molded around a diagonal side member (not shown but as in U.S.Patent 4177687) of a U-shaped reinforcement 20 having two spaced and substantially parallel leg members 22,24. The load carrying member has a tensile reinforcement such as a spiralled cord 26 positioned between layers 28, 30 of an elastomeric matrix that may contain other fibrous reinforcement such as woven fabric 32.   The load carrying member may be preformed with transversely oriented ribs 34 adapted for meshing with rib engaging portions of the leg carrying member.   Optionally, the ribs may be post-formed in a subsequent molding operation as taught in the '687 patent after the blocks are assembled.   The tensile reinforcement defines an equatorial plane 36 of the belt about which belt bending takes place.

The elastomeric portions form V-sides defining frictional driving surfaces 38, 40,  and may be made with any suitable elastomer or plastic such as the natural and synthetic rubbers, phenolics, urethanes and blends thereof.   Fibrous reinforcement may optionally be embedded in the elastomeric portions to improve structural integrity.   The friction driving surfaces project below 42 the equatorial plane and optionally, but preferably, the frictional driving surfaces project above 44 the equatorial plane as part 46, 48 of a V-side.

Each elastomeric portion has two leg member receiving cavities 50, 52 molded juxtaposed and oriented with the leg members of the reinforcement.   The belt is assembled by sliding and pressing two leg members from opposite directions over the load carrying members so that the leg members penetrate the molded cavities.  When the load carrying member is premolded with spaced transverse ribs along its exterior inner and outer surfaces, the

-4-

rib engaging portions of the leg members are placed to engage the ribs. The molded cavities grip the penetrating leg portions and hold them in transverse alignment until the so-assembled components can be more rigidly attached together such as by spot welding 54, adhesive bonding 56, or embedding the assembled leg members in an elastomeric matrix 58. With the latter type of attachment, ribs may simultaneously be formed by placing the assembled components and uncured load carrying member in a multicavity mold with additional elastomer and then pressuring the load carrying member as described in U.S. Patent 4177687.

Each elastomeric portion has two oppositely facing sides 60, 62 that interconnect with an extension of a V-side above 44 the equatorial plane 36 and define reactive surfaces. The reactive surfaces may optionally be integrally molded parts of the elastomeric portions. The oppositely facing sides are oriented transversely to the load carrying member in the direction of the ribs. The sides define reactive surface portions above and generally normally to the equatorial plane. The V-blocks are dimensioned so that when they are assembled on the load carrying member in close proximity, the reactive surface portions between successive V-blocks contact and react with each other when the belt is substantially straight and thereby inhibit belt back bending as shown in Figure 2. The reaction helps extract blocks from a pulley and reduces free span vibration. The reactive surface portions are free to move apart during belt front bending as shown in Figure 3. Optionally, the blocks may be dimensioned so that there is an interference fit between the reactive surface portions which not only further inhibits belt back bending, but also may serve as means to overcome any elastomer creep in the reactive surface area as the belt is used. When an interference fit of the reactive surfaces is desired, the oppositely facing sides are spaced farther apart. The block components may then easily be assembled on the load carrying member as it

-5-

is bent such as in Figure 3.

The foregoing description is made for purpose of illustration only and is not intended to limit the scope of the invention which is to be determined from the appended claims.

-6-

CLAIMS:

1.    A power transmission belt of the type having a plurality of V-blocks (12) attached to a load carrying member (14), each block having two elastomeric portions (16,18) that form V-sides with a frictional driving surface (38,40) projecting below an equatorial plane (36) of the load carrying member (14), characterised in that each elastomeric portion includes two oppositely facing sides (60,62) interconnecting with each V-side (46,48), oriented transversely to the load carrying member (14) that define reactive surfaces above and generally normal to the equatorial plane (36), the reactive surfaces between successive blocks being positioned to contact each other and inhibit belt back bending and being free to move apart during belt front bending.

2.    A power transmission belt as claimed in claim 1 characterised in that the reactive surfaces are integrally molded parts of the elastomeric portions (16,18).

3.    A power transmission belt as claimed in claim 1 or 2 characterised in that the reactive surfaces contact each other when the load carrying member (14) is substantially straight.

4.    A power transmission belt as claimed in claim 1, 2 or 3 characterised in that the reactive surfaces are substantially normal to the equatorial plane (36).

0047585

FIG. 1

FIG. 2

FIG. 3

FIG. 4

# 0047585

## DOCUMENTS CONSIDERED TO BE RELEVANT

| Category | Citation of document with indication, where appropriate, of relevant passages | Relevant to claim |
|---|---|---|
| D,A | US - A - 4 177 687 (THE GATES RUBBER COMPANY) | 1 |
| | --- | |
| | FR - A - 2 224 021 (REGIE NATIONALE DES USINES RENAULT) | 1,3,4 |
| | * figures 1 and 2; page 4, line 6 - page 5, line 1 * | |
| | --- | |
| | GB - A - 665 224 (FEUERUNGSBAU A.G.) | 1,3,4 |
| | * figures 1 and 2; page 2, lines 15-21; page 2, lines 49-61 * | |
| | --- | |
| | GB - A - 655 173 (F. PETER et al.) | 1,3,4 |
| | * figures 1-3; page 1, lines 55-73; page 2, lines 79 and 80 * | |
| | --------- | |

### CLASSIFICATION OF THE APPLICATION (Int. Cl.³)

F 16 G 5/16

### TECHNICAL FIELDS SEARCHED (Int. Cl.³)

B 21 L
F 16 G

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-11-1981 | JAIK |

EPO Form 1503.1  06.78